# EUROPEAN PATENT APPLICATION

(11) **EP 4 397 701 A1**
(43) Date of publication of application: **10.07.2024**
(21) Application number: 22864343.3
(22) Date of filing: 23.08.2022
(51) Int. Cl.: C08J 5/24, C08L 71/00, D06M 15/256, D06M 15/53, D06M 15/693, D06M 101/40

(54) **COMPOSITE MATERIAL OBTAINED BY INTEGRALLY COMBINING FIBER BASE MATERIAL AND CURED PRODUCT OF LIQUID CURABLE FLUORINE-CONTAINING COMPOSITION AND PRODUCTION METHOD THEREFOR, AND ARTICLE USING COMPOSITE MATERIAL**

(30) Priority: 01.09.2021 JP 2021142078
(71) Applicant: SHIN-ETSU CHEMICAL CO., LTD., Tokyo 1000005 (JP)
(72) Inventor: ASAHI Tomoyuki, Annaka-shi, Gunma 379-0224 (JP); OSAWA Yasuhisa, Tokyo 100-0005 (JP)
(74) Representative: Angerhausen, Christoph
(86) International application number: PCT/JP2022/031741
(87) International publication number: WO 2023/032759

(57) **Abstract**

Provided are a composite material that has a high strength and is superior in both chemical resistance and solvent resistance; and a production method capable of relatively easily and industrially advantageously producing such composite material. The composite material includes a fiber base material; and a cured product of a curable liquid fluorine-containing composition that contains a curable liquid fluorine-containing compound, wherein the fiber base material and the cured product are integrally formed with each other. The production method includes a step of uniformly impregnating the fiber base material with the curable liquid fluorine-containing composition; a step of defoaming the fiber base material uniformly impregnated with the curable liquid fluorine-containing composition; and a step of curing the curable liquid fluorine-containing composition uniformly impregnating the defoamed fiber base material.

## Description

### TECHNICAL FIELD

The present invention relates to a composite material integrally formed of a fiber base material and a cured product of a curable liquid fluorine-containing composition that contains a curable liquid fluorine-containing compound; a method for producing such composite material; and a product or the like using such composite material.

### BACKGROUND ART

Composite materials combining various organic resins or rubbers and fibers are applied in, for example, the automobile industry and aviation industry because they have high strengths and are lightweight.

As a specific example of such composite material, Patent document 1 discloses a composite material of a silicone rubber and carbon fibers. Patent document 2 discloses a composite material comprised of, for example, a nitrile-butadiene rubber; and polyamide fibers and carbon fibers. Patent document 3 discloses a composite material comprised of, for example, a fluorine rubber; and aramid fibers and rock wool.

The composite materials disclosed in Patent documents 1 and 2 have exhibited an insufficient solvent resistance and chemical resistance since the solvent resistance and chemical resistance of the rubbers used therein are insufficient. The composite material disclosed in Patent document 3 has a high solvent resistance and chemical resistance since a fluorine rubber is used therein. However, this composite material cannot be produced in an industrially advantageous manner because in order to integrate the rubber and the fibers, the rubber needs to be once swelled with a solvent before integrating the rubber and the fibers using a mixer and a heat roll.

### PRIOR ART DOCUMENTS

### Patent documents

Patent document 1: JP-A-2019-181717
Patent document 2: JP-A-2013-100420
Patent document 3: JP-A-Hei 10-168429

### SUMMARY OF THE INVENTION

### Problems to be solved by the invention

Thus, it is an object of the present invention to provide a composite material that has a high strength and is superior in both chemical resistance and solvent resistance; and a production method capable of relatively easily and industrially advantageously producing such composite material.

### Means to solve the problems

The inventor of the present invention completed the invention as follows. Specifically, the inventor found that by curing a curable liquid fluorine-containing composition impregnating a fiber base material so as to combine the cured product of this composition with the fiber base material, a composite material that has a high strength and is superior in both chemical resistance and solvent resistance can be produced relatively easily and industrially advantageously.

Thus, the present invention is to provide the following composite material; a method for producing such composite material; and a product or the like using such composite material.

<1> A composite material comprising:
   a fiber base material; and
   a cured product of a curable liquid fluorine-containing composition that contains a curable liquid fluorine-containing compound,
   wherein the fiber base material and the cured product are integrally formed with each other.
<2> The composite material according to <1>, wherein the curable liquid fluorine-containing compound is a curable perfluoro group-containing compound.
<3> The composite material according to <2>, wherein the curable perfluoro group-containing compound is a compound having a divalent perfluoroalkylene structure and/or a divalent perfluoropolyether structure.
<4> The composite material according to <3>, wherein the curable perfluoropolyether group-containing compound is a compound containing alkenyl groups.
<5> The composite material according to any one of <1> to <4>, wherein the curable liquid fluorine-containing composition comprises:
   (A) a curable polyfluoro compound having at least two alkenyl groups per molecule and having a divalent perfluoroalkylene structure and/or a divalent perfluoropolyether structure in main chain;
   (B) a cross-linking agent having at least two hydrosilyl groups per molecule;
   (C) a hydrosilylation reaction catalyst; and
   (D) a reinforcement filler.
<6> The composite material according to <5>, wherein the curable liquid fluorine-containing composition further comprises:
   (E) a hydrosilylation reaction control agent.
<7> The composite material according to any one of claims <1> to <6>, wherein the fiber base material is a carbon fiber base material or a glass fiber base material.
<8> A method for producing the composite material according to any one of claims 1 to 7, comprising:
   a step of uniformly impregnating the fiber base material with the curable liquid fluorine-containing composition;
   a step of defoaming the fiber base material uniformly impregnated with the curable liquid fluorine-containing composition; and
   a step of curing the curable liquid fluorine-containing composition uniformly impregnating the defoamed fiber base material.
<9> A rubber product having the composite material according to any one of claims <1> to <7> as a partial or overall structure thereof.
<10> The rubber product according to <9>, wherein the composite material is a seal material, a diaphragm, a protective sheet, or a sheet punched product.

### Effects of the invention

The composite material of the present invention is useful as, for example, a seal material, a diaphragm, a chemical-resistant protective sheet, and a punched product of such sheet, because this composite material has a high strength and is superior in both chemical resistance and solvent resistance.

### MODE FOR CARRYING OUT THE INVENTION

The present invention is described in detail hereunder. However, the present invention shall not be limited to the following descriptions.

In a composite material of the present invention that includes a fiber base material and a cured product of a curable liquid fluorine-containing composition that contains a curable liquid fluorine-containing compound, wherein the fiber base material and the cured product are integrally formed with each other, as the curable liquid fluorine-containing compound serving as a base compound (base polymer) in the curable liquid fluorine-containing composition, preferred is a curable perfluoro group-containing compound, more preferred is a curable perfluoropolyether group-containing compound, even more preferred is a curable alkenyl group- and perfluoropolyether group-containing compound.

In the curable liquid fluorine-containing composition, the curable liquid fluorine-containing compound is preferably contained in an amount of 60 to 95% by mass, particularly preferably 65 to 93% by mass.

In the case of the composite material of the present invention, in addition to the curable liquid fluorine-containing compound serving as the base compound (base polymer), the curable liquid fluorine-containing composition may usually further contain a cross-linking agent, a curing catalyst, a filler (filling material) and the like.

In the case of the composite material of the present invention, the curable liquid fluorine composition is preferably exemplified by one containing the following components (A) to (D).

### [Component (A)]

A component (A) is the curable liquid fluorine-containing compound serving as the base compound (base polymer) in the curable liquid fluorine-containing composition of the present invention, and is a curable polyfluoro compound having at least two alkenyl groups per molecule and having a divalent perfluoroalkylene structure and/or a divalent perfluoropolyether structure in the main chain. It is preferred that the curable polyfluoro compound as the component (A) be a linear polyfluoro compound having an alkenyl group at both molecular chain ends.

Here, in this specification, "linear" refers to a condition where the divalent perfluoroalkylene structure (perfluoroalkylene group) in the main chain is linear; or a condition where the repeating units (perfluorooxyalkylene units) composing the divalent perfluoropolyether structure in the main chain are bonded to one another in a linear manner, in which each repeating unit itself composing the perfluoropolyether structure may be a perfluorooxyalkylene unit having a branched structure (e.g., -CF(CF₃)CF₂O-).

As the alkenyl groups contained in the component (A), preferred are those having 2 to 8, particularly 2 to 6 carbon atoms and having a CH₂=CH- structure, examples of which may include a vinyl group, an allyl group, a propenyl group, an isopropenyl group, a butenyl group, and a hexenyl group, of which a vinyl group and an allyl group are particularly preferred.

The alkenyl groups are preferably contained in the linear polyfluoro compound as the component (A) by an amount of 0.005 to 0.3 mol/100 g, more preferably 0.007 to 0.2 mol/100 g. When the alkenyl groups are contained in an amount of not smaller than 0.005 mol/100 g, the composition will exhibit a sufficient degree of crosslinking whereby there will be no concerns that curing failure will occur. In the meantime, when the alkenyl groups are contained in an amount of not larger than 0.3 mol/100 g, there will be no concerns that the cured product (fluoropolyether-based rubber elastic body) obtained by curing the composition will exhibit impaired mechanical properties. The amount of the alkenyl groups contained in the curable polyfluoro compound as the component (A) can be calculated by ¹H-NMR measurement.

The perfluoropolyether structure in the component (A) is one containing many repeating units (perfluorooxyalkylene units) represented by:

-CₐF₂ₐO-.

(In this formula, a is a number of 1 to 6.)

The perfluoropolyether structure may, for example, be one represented by the following general formula (1).

-(CₐF₂ₐO)_{b}- (1)

(In the formula (1), a is a number of 1 to 6; b is a number of 1 to 300, preferably a number of 1 to 200.)

Examples of the repeating unit represented by -CₐF₂ₐO- include those expressed by the following formulae.

-CF₂O-

-CF₂CF₂O-

-CF₂CF₂CF₂O-

-CF(CF₃)CF₂O-

-CF₂CF₂CF₂CF₂O-

-CF₂CF₂CF₂CF₂CF₂CF₂O-

-C(CF₃)₂O-

Among the above examples, particularly preferred are the repeating units expressed by the following formulae.

-CF₂O-

-CF₂CF₂O-

-CF₂CF₂CF₂O-

-CF(CF₃)CF₂O-

Here, the perfluoropolyether structure in the component (A) may be composed of one kind of the above repeating units, or two or more kinds of them.

As a preferable example of the component (A), there may be listed a linear polyfluoro compound represented by the following general formula (2) or (3). 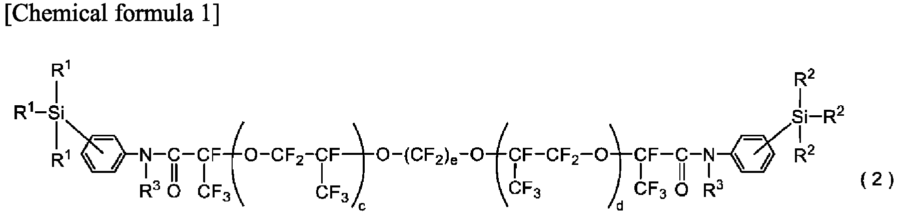 (In the formula (2), R¹ and R² each represent an alkenyl group or a substituted or unsubstituted monovalent hydrocarbon group having no aliphatic unsaturated bond. R¹s are independent from one another, R²s are also independent from one another, and at least two of the total six R¹s and R¹s are alkenyl groups. Each R³ independently represents a hydrogen atom or a substituted or unsubstituted monovalent hydrocarbon group. c and d each represent a number of 1 to 150, provided that an average value of c + d is 2 to 300. e is a number of 1 to 6.) 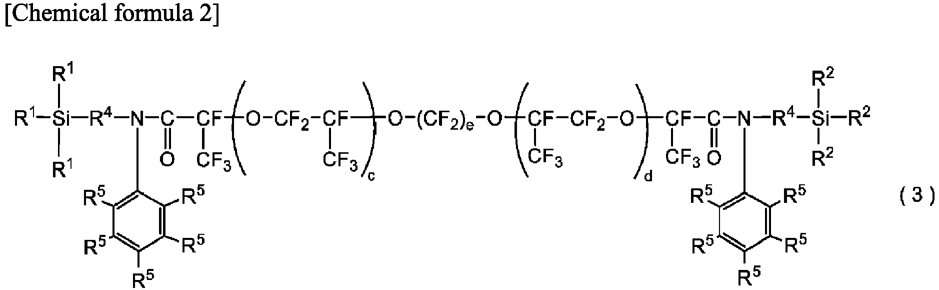 (In the formula (3), R¹ and R² each represent an alkenyl group or a substituted or unsubstituted monovalent hydrocarbon group having no aliphatic unsaturated bond. R¹s are independent from one another, R²s are also independent from one another, and at least two of the total six R¹s and R²s are alkenyl groups. Each R⁴ independently represents an alkylene group having 1 to 6 carbon atoms. Each R⁵ independently represents a hydrogen atom or an alkyl group that may be fluorine-substituted and has 1 to 4 carbon atoms. c and d each represent a number of 1 to 150, provided that an average value of c + d is 2 to 300. e is a number of 1 to 6.)

Here, the alkenyl groups represented by R¹s and R²s may, for example, be those exemplified as the alkenyl groups contained in the component (A). As the substituted or unsubstituted monovalent hydrocarbon group having no aliphatic unsaturated bond other than such alkenyl group, preferred are those having 1 to 12 carbon atoms, particularly preferably those having 1 to 10 carbon atoms. Specific examples of such monovalent hydrocarbon group include an alkyl group such as a methyl group, an ethyl group, a propyl group, a butyl group, a hexyl group, a cyclohexyl group, and an octyl group; an aryl group such as a phenyl group and a tolyl group; an aralkyl group such as a benzyl group and a phenylethyl group; and monovalent hydrocarbon groups obtained by substituting part of or all the hydrogen atoms in any of these groups with halogen atoms such as fluorine atoms. Here, as R¹ and R², particularly preferred are a vinyl group, an allyl group, a methyl group, and an ethyl group.

Further, R¹s are independent from one another, R²s are also independent from one another, and at least two (i.e., 2 to 6) of the total six R¹s and R²s are alkenyl groups; it is preferred that at least one of R¹s and at least one of R²s (i.e., 1 to 3 each for R¹ and R²) are alkenyl groups, particularly preferably vinyl groups or allyl groups.

As the substituted or unsubstituted monovalent hydrocarbon group represented by R³, there may be listed, for example, those that are exemplified as the substituted or unsubstituted monovalent hydrocarbon group having no aliphatic unsaturated bond represented by R¹ and R². As R³, preferred are a hydrogen atom, a methyl group, and an ethyl group.

R⁴ represents an alkylene group having 1 to 6, preferably 2 to 6 carbon atoms, specific examples of which include a methylene group, an ethylene group, a propylene group (trimethylene group, methylethylene group), a butylene group (tetramethylene group, methylpropylene group), and a hexamethylene group, of which an ethylene group and a propylene group.

Each R⁵ independently represents a hydrogen atom or an alkyl group that may be fluorine-substituted and has 1 to 4 carbon atoms. Specific examples of the alkyl group that may be fluorine-substituted and has 1 to 4 carbon atoms may include alkyl groups such as a methyl group, an ethyl group, a propyl group and a butyl group; and groups obtained by substituting part of or all the hydrogen atoms in these alkyl groups with fluorine atoms, one example of such substituted group being a trifluoromethyl group. Particularly, a hydrogen atom is preferred.

Further, c and d each represent a number of 1 to 150, preferably a number of 1 to 100, provided that an average value of c + d is 2 to 300, preferably 2 to 200. Furthermore, e is a number of 1 to 6, preferably a number of 1 to 4.

Specific examples of the linear polyfluoro compound represented by the general formula (2) include those expressed by the following formulae. Here, Me represents a methyl group, and Et represents an ethyl group. 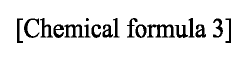 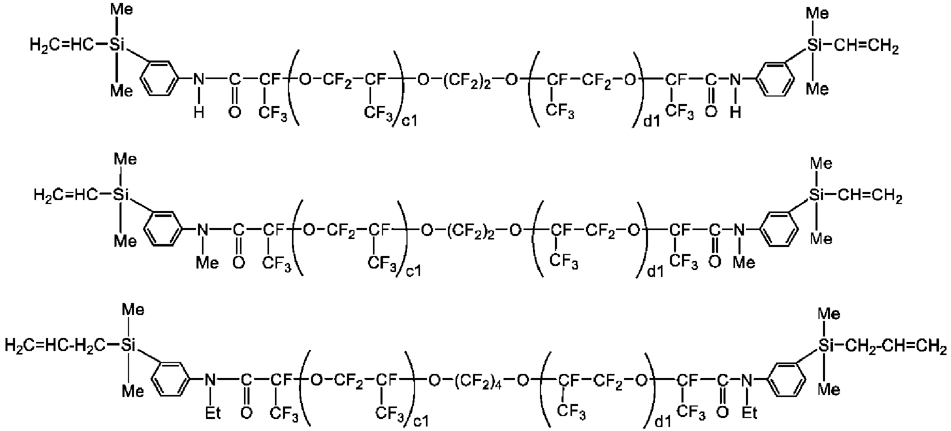 (In these formulae, c1 and d1 each represent a number of 1 to 150.) 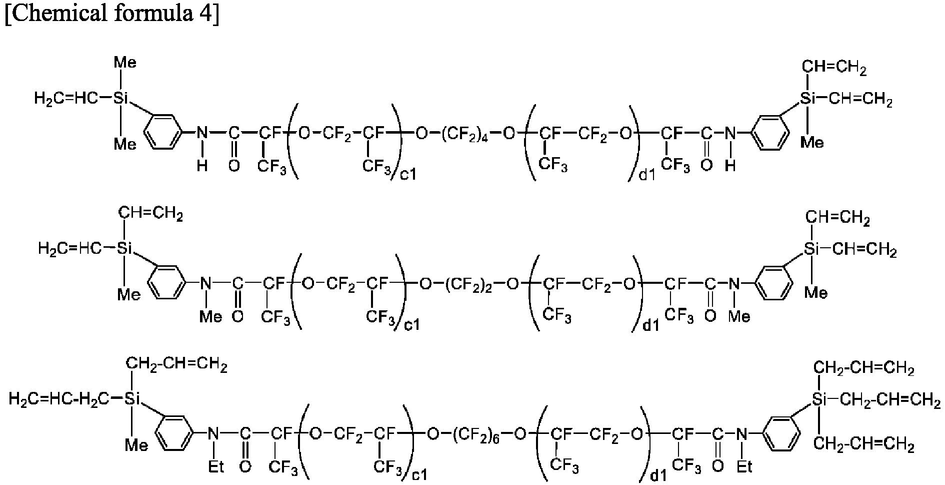 (In these formulae, c1 and d1 each represent a number of 1 to 150.) 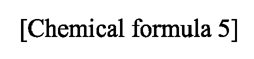 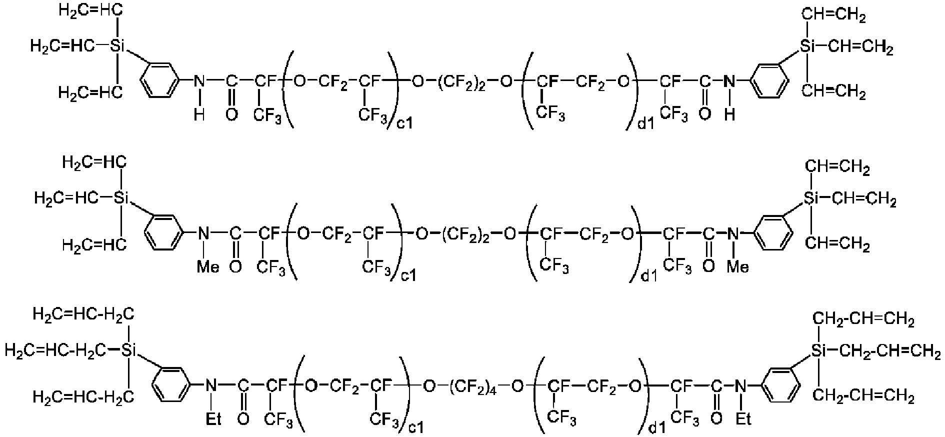 (In these formulae, c1 and d1 each represent a number of 1 to 150.)

Further, specific examples of the linear polyfluoro compound represented by the general formula (3) include those expressed by the following formulae. 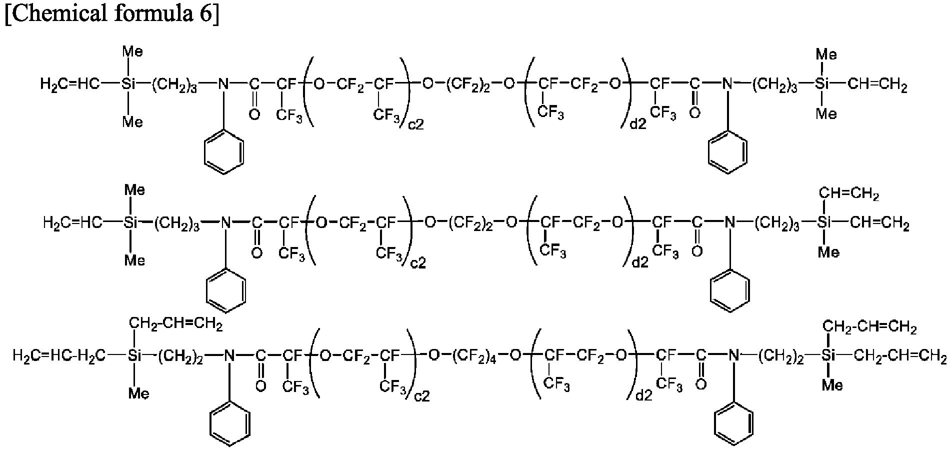 (In these formulae, c2 and d2 each represent a number of 1 to 150.) 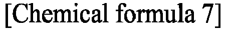 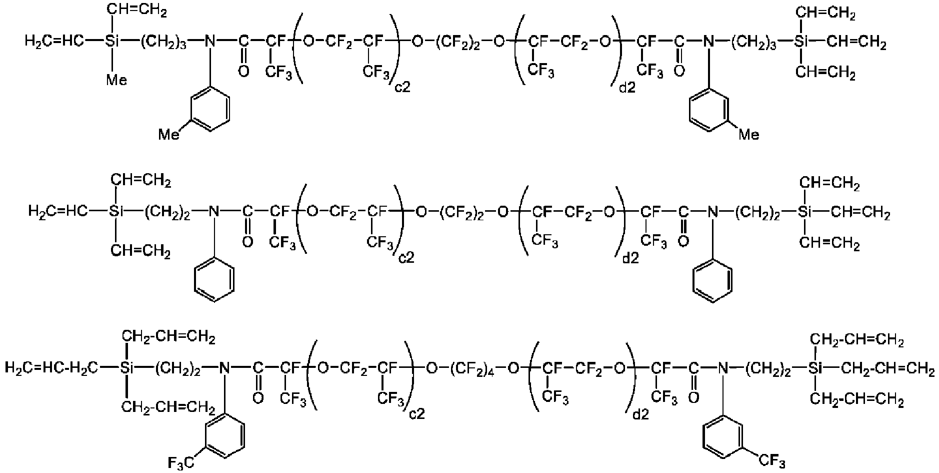 (In these formulae, c2 and d2 each represent a number of 1 to 150.)

Here, in the present invention, viscosity can be measured by a rotary viscometer (e.g., BL-type, BH-type, BS-type, cone plate-type, rheometer-type). Especially, the viscosities (23°C) of the linear polyfluoro compounds represented by the general formulae (2) and (3) are 500 to 100,000 mPa·s, particularly preferably 1,000 to 50,000 mPa·s, when measured by a viscosity measuring procedure stipulated in JIS K7117-1. When such viscosity is not lower than 500 mPa·s, there will be no concerns that the composition will exhibit an impaired storage stability; when such viscosity is not higher than 100,000 mPa·s, there will be no concerns that the composition will exhibit an impaired extensibility.

Further, the polymerization degree (or molecular weight) of the linear polyfluoro compound that reflects, for example, the number of the repeating perfluorooxyalkylene units composing the perfluoropolyether structure of the main chain, can, for example, be obtained as a number average polymerization degree (or number average molecular weight) in terms of polystyrene via a gel permeation chromatography (GPC) using a fluorine-based solvent as a developing solvent. Moreover, the number average polymerization degree (or number average molecular weight) of the linear polyfluoro compound may also be calculated via ¹⁹F-NMR.

One kind of these linear polyfluoro compounds may be used alone, or two or more kinds of them may be used in combination. That is, of the linear polyfluoro compounds represented by the general formulae (2) and (3), one kind of them may be used alone, or two or more kinds of them may be used in combination; and the linear polyfluoro compounds represented by the general formulae (2) and (3) may be used in combination as well.

### [Component (B)]

A component (B) is a cross-linking agent enabling an addition reaction and having at least two hydrosilyl groups (SiH groups) per molecule. The component (B) is preferably a fluorine-containing organohydrogenpolysiloxane having, per molecule, a monovalent perfluoroalkyl group or monovalent perfluorooxyalkyl group, or a divalent perfluoroalkylene group or divalent perfluorooxyalkylene group, and at least two silicon atom-bonded hydrogen atoms (SiH groups); and having, per molecule, no epoxy groups and no silicon atom-bonded alkoxy groups. The component (B) functions as a cross-linking agent of the component (A).

The monovalent perfluoroalkyl group, monovalent perfluorooxyalkyl group, divalent perfluoroalkylene group, and divalent perfluorooxyalkylene group are groups introduced from the perspectives of, for example, compatibility to the component (A), dispersibility, and uniformity after curing.

As such monovalent perfluoroalkyl group or monovalent perfluorooxyalkyl group, there may be listed those expressed by the following general formula (4) or (5).

C_{f}F_{2f+1}- (4)

(In the formula (4), f is a number of 1 to 10, preferably a number of 3 to 7.) 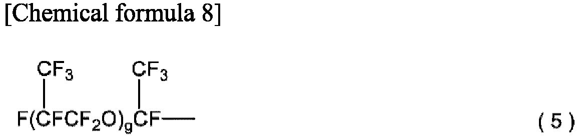 (In the formula (5), g is a number of 1 to 50, preferably a number of 2 to 30.)

Further, as the divalent perfluoroalkylene group or divalent perfluorooxyalkylene group, there may be listed those expressed by the following general formulae (6) to (8).

-CₕF₂ₕ- (6)

(In the formula (6), h is a number of 1 to 20, preferably a number of 2 to 10.) 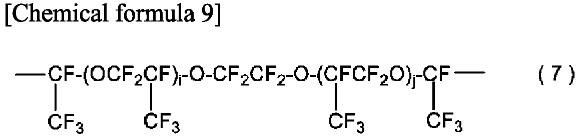 (In the formula (7), i and j each represent a number of not smaller than 1, preferably a number of 1 to 100, provided that an average value of i + j is 2 to 200, preferably 2 to 100.)

-CF₂O-(CF₂CF₂O)ₖ(CF₂O)ₗ-CF₂- (8)

(In the formula (8), k and 1 each represent a number of 1 to 50, preferably a number of 1 to 30, provided that an average value of k + 1 is 2 to 100, preferably 2 to 60. The repeating units may be bonded to one another randomly.)

Further, it is preferred that such perfluoroalkyl group, perfluorooxyalkyl group, perfluoroalkylene group, or perfluorooxyalkylene group is linked to the silicon atoms composing polysiloxane via a divalent linking group. Such divalent linking group is preferably a substituted or unsubstituted divalent hydrocarbon group that has 2 to 13, particularly 2 to 8 carbon atoms, and may have an oxygen atom, a nitrogen atom, or a silicon atom. Specific examples thereof may include an alkylene group, an arylene group, and a combination(s) thereof; or groups established by interposing in these groups one or more structures or the like selected from the group consisting of an ether bond oxygen atom, an amide bond, a carbonyl bond, an ester bond, and a diorganosilylene group such as a dimethylsilylene group. For example, there may be listed the following groups each having 2 to 13 carbon atoms.

-CH₂CH₂-

-CH₂CH₂CH₂-

-CH₂CH₂CH₂OCH₂-

-CH₂CH₂CH₂-NH-CO-

-CH₂CH₂CH₂-N(Ph)-CO-

-CH₂CH₂CH₂-N(CH₃)-CO-

-CH₂CH₂CH₂-N(CH₂CH₃)-CO-

-CH₂CH₂CH₂-N(CH(CH₃)₂)-CO-

-CH₂CH₂CH₂-O-CO-

-CH₂CH₂-Si(CH₃)₂-Ph'-N(CH₃)-CO-

-CH₂CH₂CH₂-Si(CH₃)₂-Ph'-N(CH₃)-CO-

(Here, Ph represents a phenyl group, and Ph' represents a phenylene group.)

Further, in the fluorine-containing organohydrogenpolysiloxane as the component (B), other than the monovalent or divalent fluorine-containing organic group(s) and the silicon atom-bonded hydrogen atoms, monovalent substituent groups bonded to silicon atoms are substituted or unsubstituted alkyl groups or aryl groups having 1 to 20, preferably 1 to 12 carbon atoms, examples of which may include alkyl groups such as a methyl group, an ethyl group, a propyl group, a butyl group, a hexyl group, a cyclohexyl group, an octyl group, and a decyl group; aryl groups such as a phenyl group, a tolyl group, and a naphthyl group; and groups obtained by substituting part of or all the hydrogen atoms in any of these groups with, for example, halogen atoms such as chlorine atoms, and cyano groups, examples of such substituted groups being a chloromethyl group, a chloropropyl group, and a cyanoethyl group. Among them, a methyl group is preferred. Here, epoxy groups and alkoxy groups do not exist.

The structure of the fluorine-containing organohydrogenpolysiloxane as the component (B) may be any of a cyclic structure, a chainlike structure, a three-dimensionally networked structure, or a structure combining these structures. There are no particular restrictions on the number of the silicon atoms in this fluorine-containing organohydrogenpolysiloxane; the number of the silicon atoms is normally 2 to 60, preferably 3 to 30, more preferably 4 to 30.

Further, the component (B) has at least two, preferably at least three SiH groups, per molecule; the SiH groups are preferably contained in an amount of 0.0001 to 0.02 mol/g, more preferably 0.0002 to 0.01 mol/g.

As the component (B), there may be listed, for example, those represented by the following general formulae (9) to (15). 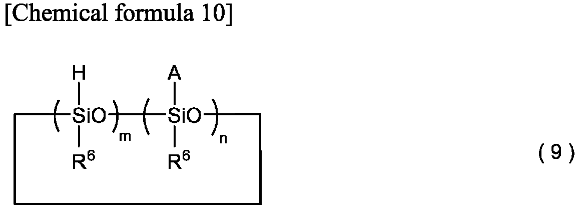 (In the formula (9), each A independently represents a monovalent perfluoro alkyl group or monovalent perfluorooxyalkyl group bonded to the silicon atoms composing polysiloxane via a divalent hydrocarbon group that may have an oxygen atom, a nitrogen atom, or a silicon atom, where the monovalent perfluoro alkyl group or monovalent perfluorooxyalkyl group may, for example, be those expressed by the formula (4) or (5). Each R⁶ independently represents a substituted or unsubstituted alkyl group or aryl group having 1 to 20, preferably 1 to 12 carbon atoms. Further, m is a number of 2 to 6, preferably a number of 3 to 6, and n is a number of 1 to 4, preferably a number of 1 to 3, provided that m + n is a number of 4 to 10, preferably a number of 4 to 9. Here, no restrictions are imposed on a bonding order of -(Si(H)(R⁶)O)- and - (Si(A)(R⁶)O)-. 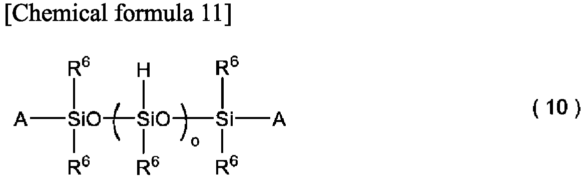 (In the formula (10), each A is independently identical to the above-defined A, and each R⁶ is independently identical to the above-defined R⁶. Further, o is a number of 2 to 50, preferably a number of 3 to 30.) 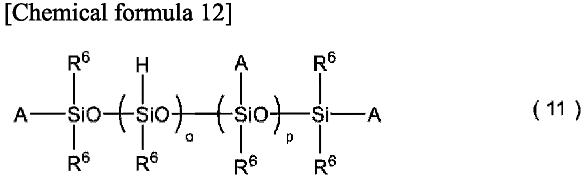 (In the formula (11), each A is independently identical to the above-defined A, and each R⁶ is independently identical to the above-defined R⁶. o is a number of 2 to 50, preferably a number of 3 to 30, and p is a number of 1 to 40, preferably a number of 1 to 20, provided that o + p is a number of 4 to 60, preferably a number of 4 to 50. Here, no restrictions are imposed on a bonding order of -(Si(H)(R⁶)O)- and -(Si(A)(R⁶)O)-.) 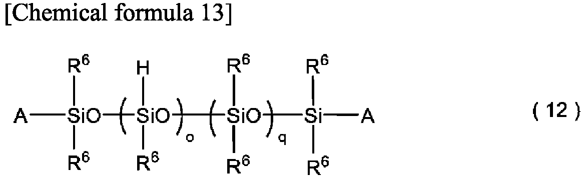 (In the formula (12), each A is independently identical to the above-defined A, and each R⁶ is independently identical to the above-defined R⁶. o is a number of 2 to 50, preferably a number of 3 to 30, and q is a number of 1 to 40, preferably a number of 1 to 20, provided that o + q is a number of 4 to 60, preferably a number of 4 to 50. Here, no restrictions are imposed on a bonding order of -(Si(H)(R⁶)O)- and -(Si(R⁶)₂O)-.) 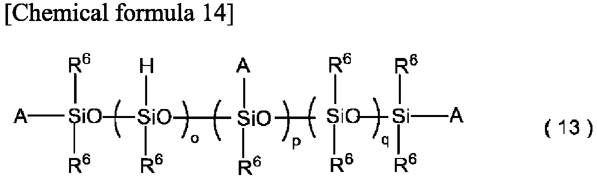 (In the formula (13), each A is independently identical to the above-defined A, and each R⁶ is independently identical to the above-defined R⁶. o is a number of 2 to 50, preferably a number of 3 to 30, p is a number of 1 to 40, preferably a number of 1 to 20, and q is a number of 1 to 40, preferably a number of 1 to 20, provided that o + p+q is a number of 5 to 60, preferably a number of 5 to 50. Here, no restrictions are imposed on a bonding order of -(Si(H)(R⁶)O)-, - (Si(A)(R⁶)O)-, and -(Si(R⁶)₂O)-.) 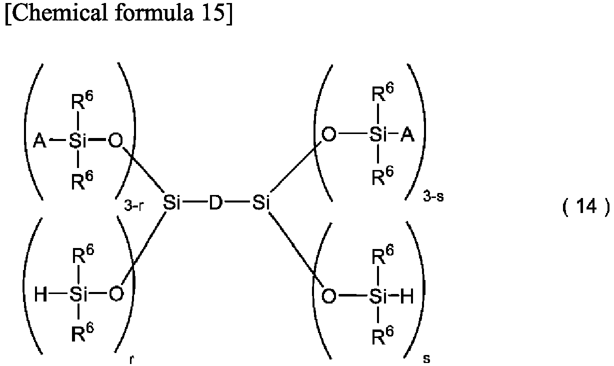 (In the formula (14), D represents a divalent perfluoro alkylene group or divalent perfluorooxyalkylene group bonded to each of the adjacent silicon atoms via an oxygen atom, an alkylene group, or a divalent hydrocarbon group that may have an oxygen atom or a nitrogen atom, where the divalent perfluoro alkylene group or divalent perfluorooxyalkylene group may, for example, be any one of those expressed by the formulae (6) to (8). Further, each A is independently identical to the above-defined A, and each R⁶ is independently identical to the above-defined R⁶. Furthermore, r is a number of 0 to 3, and s is a number of 0 to 3, provided that r + s is a number of 2 to 6, preferably a number of 3 to 5.) 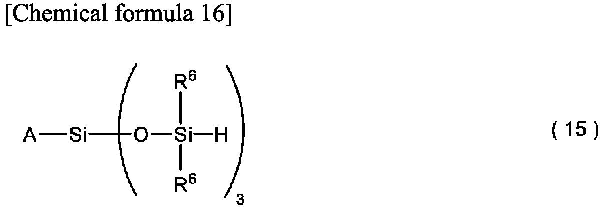 (In the formula (15), A is identical to the above-defined A, and each R⁶ is independently identical to the above-defined R⁶.)

Specific examples of the component (B) may include the following compounds. Any one kind of these compounds may be used alone, or two or more kinds of them may be used in combination. Here, in the following formulae, Me represents a methyl group, and Ph represents a phenyl group. 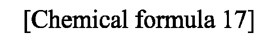 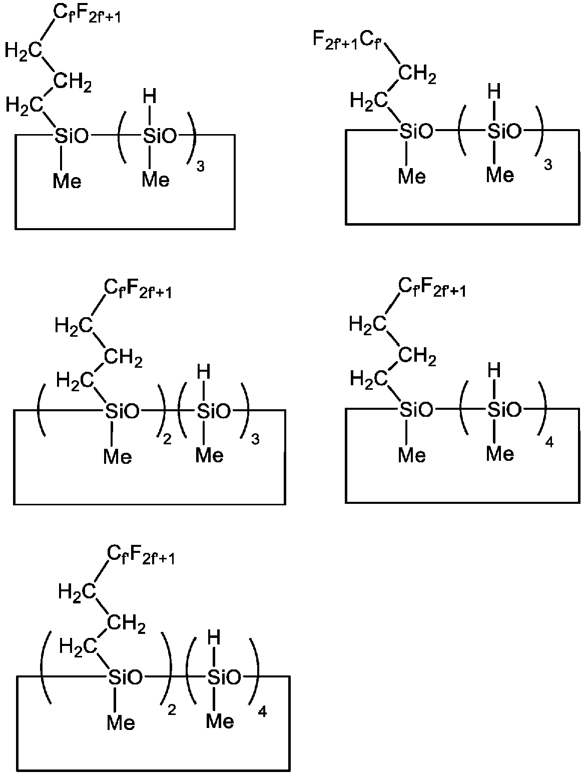 (In these formulae, f' is a number of 1 to 10.) 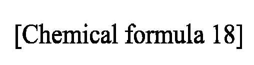 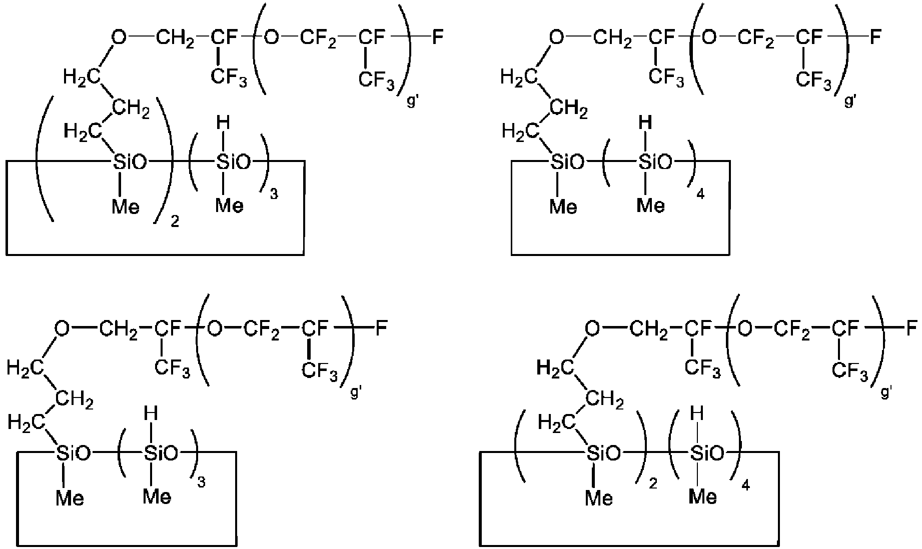 (In these formulae, g' is a number of 1 to 50.) 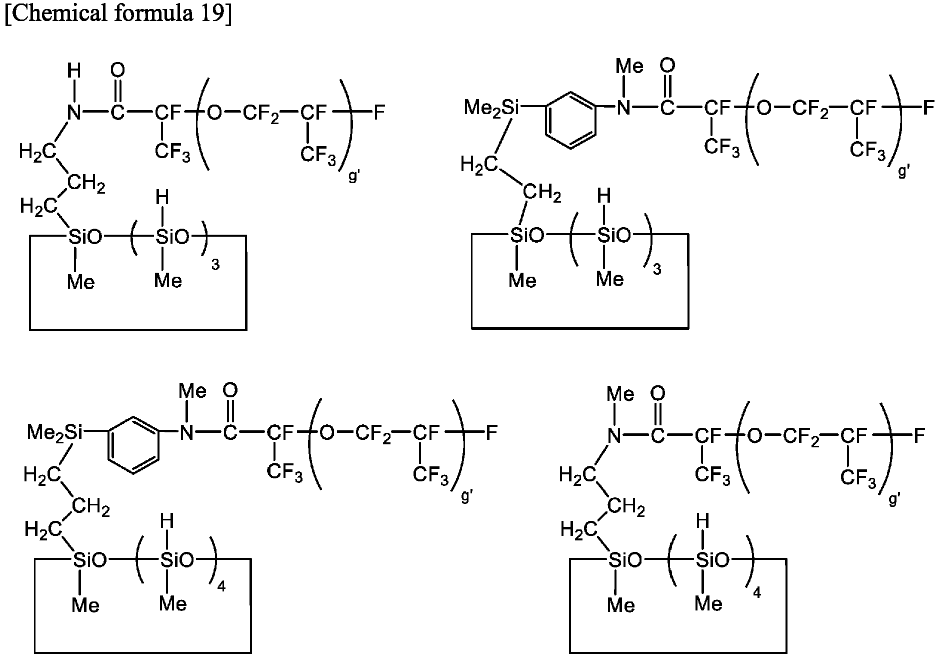 (In these formulae, g' is a number of 1 to 50.) 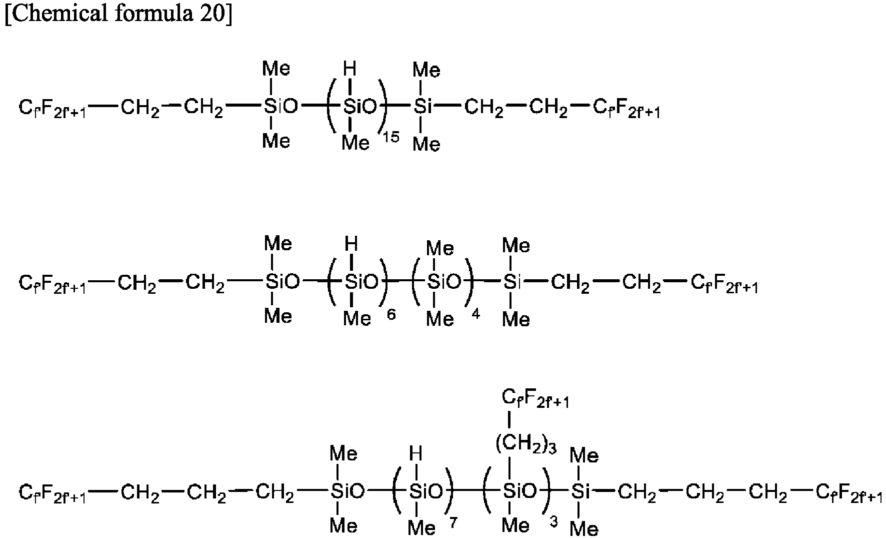 (In these formulae, f' is a number of 1 to 10.) 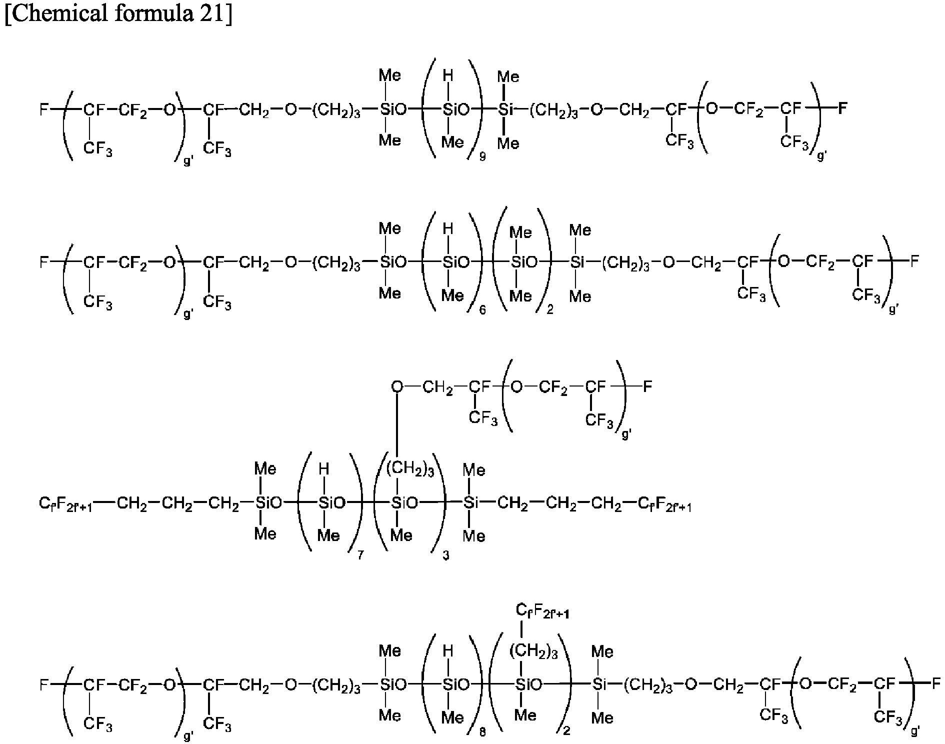 (In these formulae, f' is a number of 1 to 10, and g' is a number of 1 to 50.) 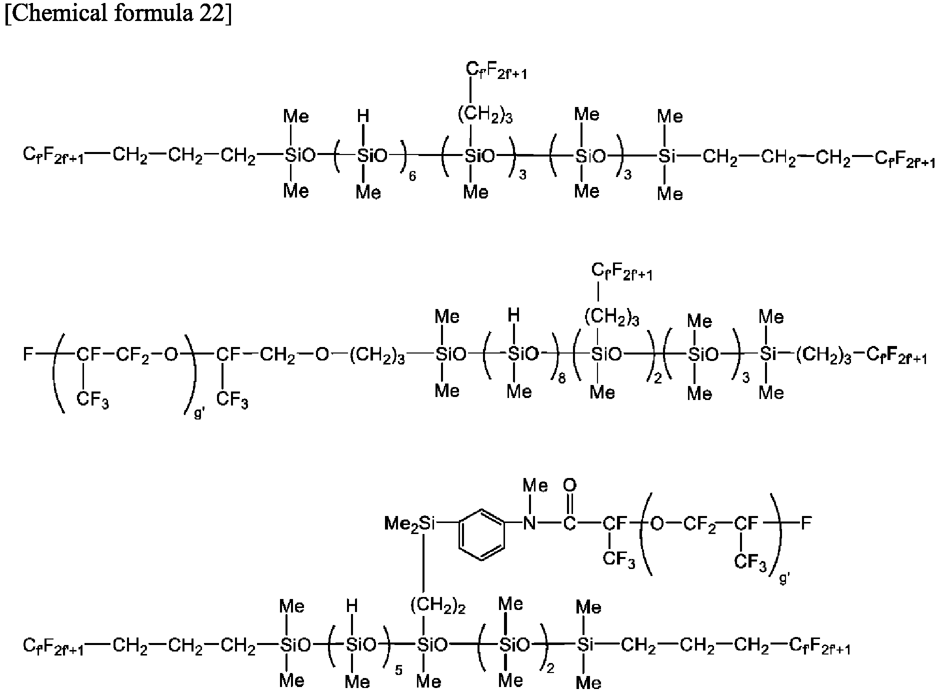 (In these formulae, f' is a number of 1 to 10, and g' is a number of 1 to 50.) 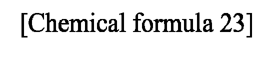 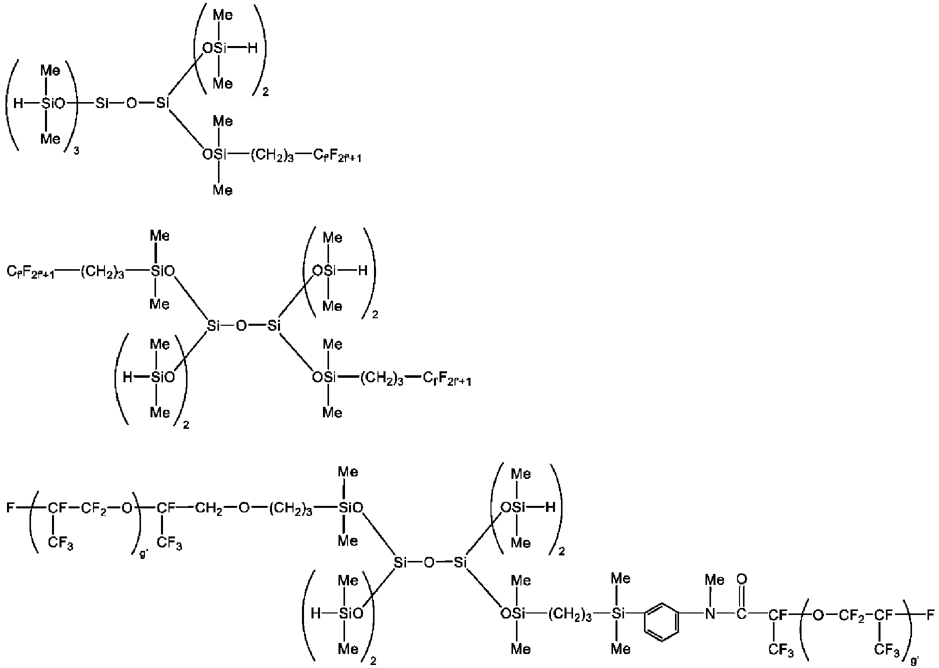 (In these formulae, f' is a number of 1 to 10, and g' is a number of 1 to 50.) 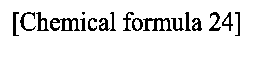 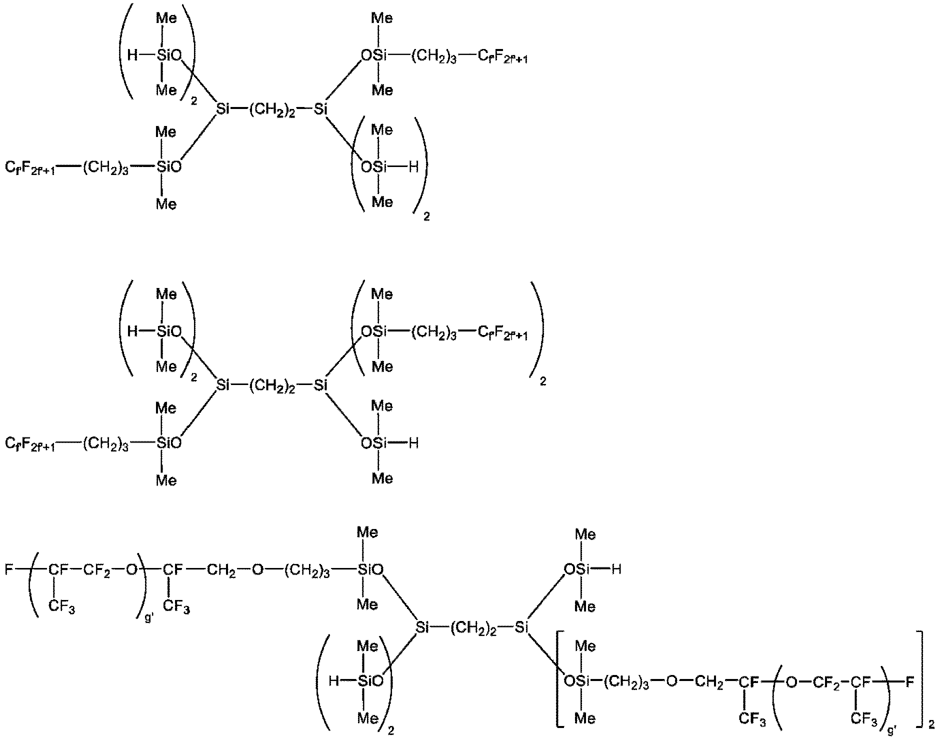 (In these formulae, f' is a number of 1 to 10, and g' is a number of 1 to 50.) 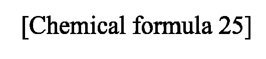 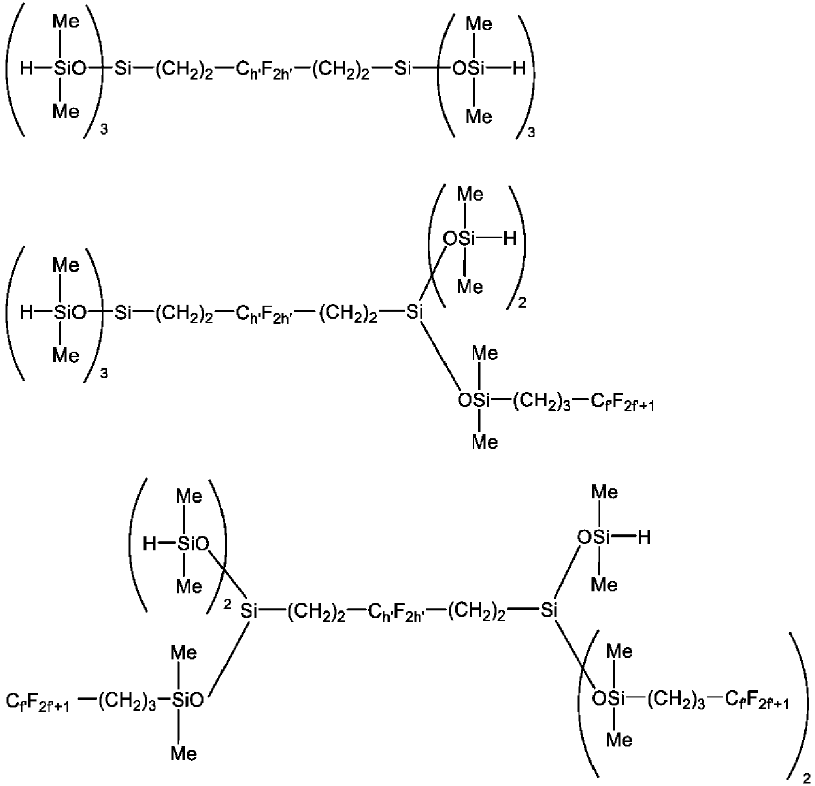 (In these formulae, f' is a number of 1 to 10, and h' is a number of 1 to 20.) 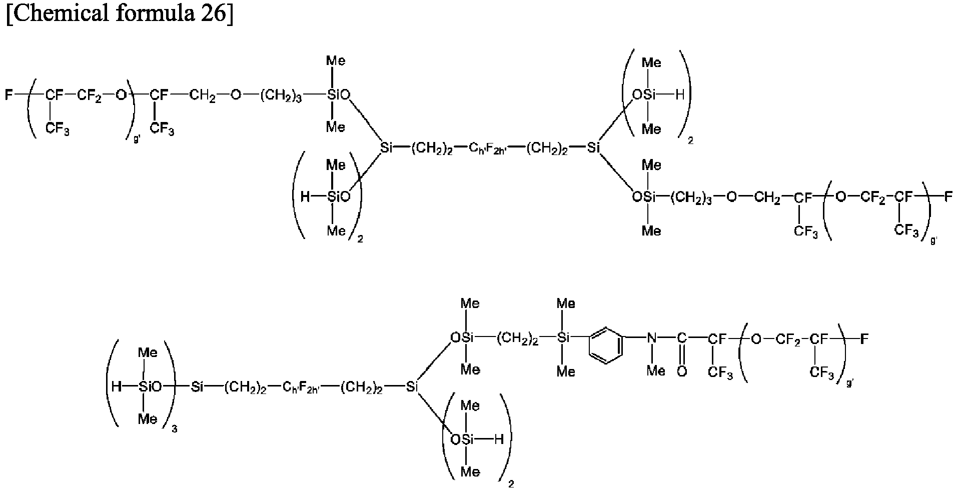 (In these formulae, g' is a number of 1 to 50, and h' is a number of 1 to 20.) 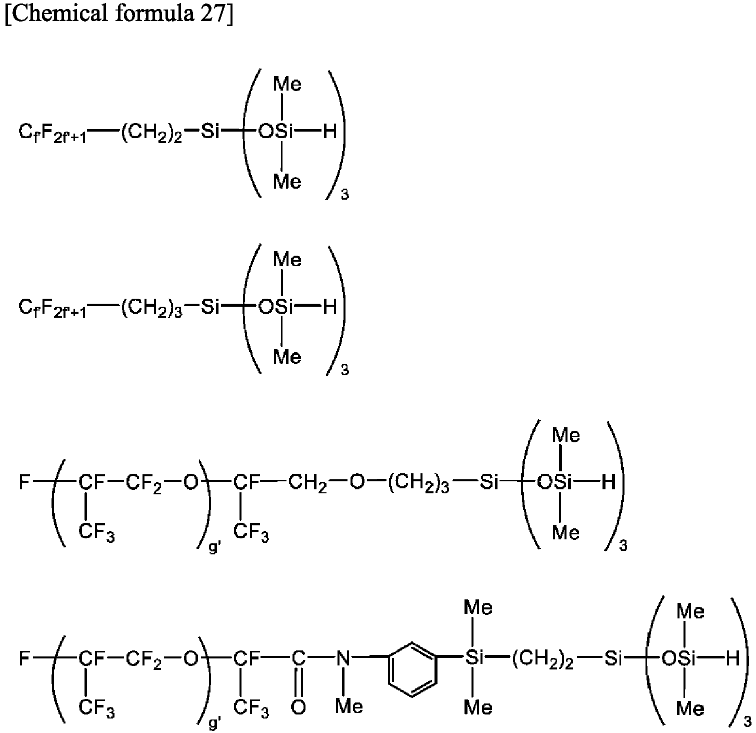 (In these formulae, f' is a number of 1 to 10, and g' is a number of 1 to 50.) 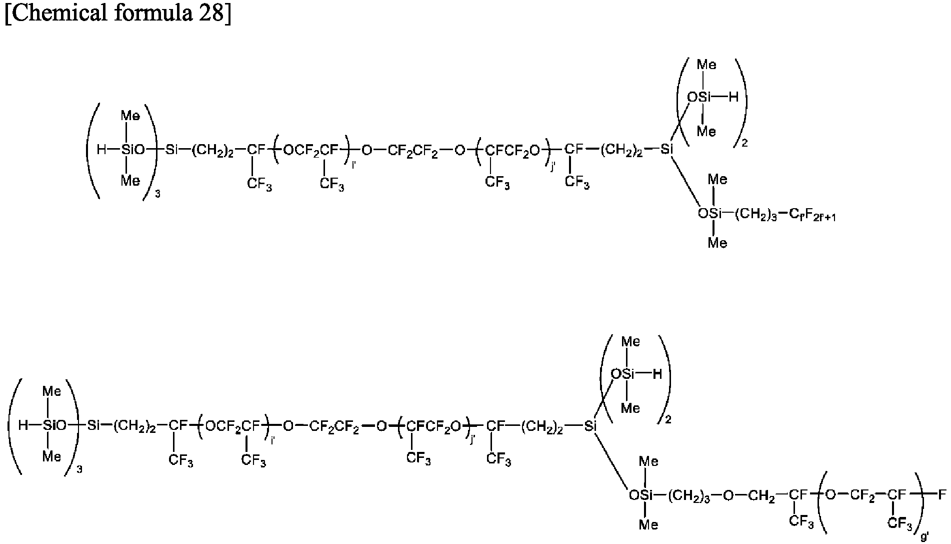 (In these formulae, f' is a number of 1 to 10, and g' is a number of 1 to 50. i' and j' are each a number of 1 to 100, provided that i'+j' is a number of 2 to 200.) 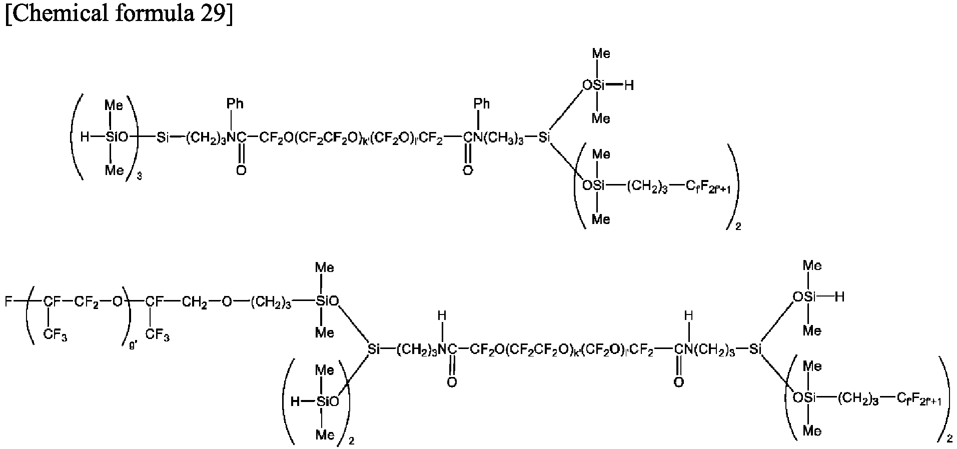 (In these formulae, f' is a number of 1 to 10, and g' is a number of 1 to 50. k' and l' are each a number of 1 to 50, provided that k'+l' is a number of 2 to 100.)

As for the component (B), one kind thereof may be used alone, or two or more kinds thereof may be used in combination. Further, the component (B) is added in an amount (molar ratio) at which the silicon atom-bonded hydrogen atoms (SiH groups) in the component (B) will be in an amount of 0.5 to 3 mol, preferably 0.6 to 2 mol, per 1 mol of the alkenyl groups contained in the composition of the present invention (especially the alkenyl groups in the component (A)). When the SiH groups are in an amount of smaller than 0.5 mol, an insufficient degree of crosslinking will be observed; when the SiH groups are in an amount of larger than 3 mol, storage stability will be impaired, or the cured product obtained after curing will exhibit an impaired heat resistance.

### [Component (C)]

A hydrosilylation reaction catalyst as a component (C) is a catalyst for promoting an addition reaction between the components (A) and (B). This hydrosilylation reaction catalyst is normally a noble metal (especially a platinum-group metal) or a compound thereof; it is preferred that there be used a platinum compound or platinum which is relatively easily obtainable.

As a platinum compound, there may be listed, for example, chloroplatinic acid; a complex of chloroplatinic acid and an olefin such as ethylene; a complex of chloroplatinic acid and an alcohol or vinylsiloxane; and a metallic platinum supported on silica, alumina, carbon or the like. As a hydrosilylation reaction catalyst other than platinum or a compound thereof, there are also known rhodium-, ruthenium-, iridium-, and palladium-based compounds, examples of which may include RhCl(PPh₃)₃, RhCl(CO)(PPh₃)₂, Ru₃(CO)₁₂, IrCl(CO)(PPh₃)₂, and Pd(PPh₃)₄. In these formulae, Ph represents a phenyl group.

When using these catalysts, they may be used in the forms of solids if they are solid catalysts; however, in order to obtain a more uniform cured product, for example, it is preferred that chloroplatinic acid or a complex be at first dissolved in a proper solvent such as toluene and ethanol, and then compatibilized with the linear polyfluoro compound as the component (A) upon use.

As for the component (C), one kind thereof may be used alone, or two or more kinds thereof may be used in combination.

There are no particular restrictions on the amount of these catalysts used. A desired curing speed can be achieved with a catalytic amount; however, in terms of economic efficiency or for the purpose of obtaining a favorable cured product, the catalyst(s) is normally used in an amount (in terms of mass of platinum-group metal atoms) of 0.1 to 2,000 ppm, preferably 0.1 to 500 ppm, particularly preferably 0.5 to 200 ppm, with respect to the mass of the component (A). Nevertheless, the amount of the catalyst(s) used can be appropriately increased or decreased depending on a desired curing speed.

The conditions for the addition reaction (hydrosilylation reaction) can be appropriately selected, and the reaction may be performed at room temperature; however, in order to hasten the reaction, the reaction may be performed under a heated condition of 50 to 200°C.

### [Component (D)]

A component (D) is a reinforcement filler. Examples of such reinforcement filler include silica-based reinforcement fillers and reinforcement or quasi-reinforcement fillers. Examples of silica-based reinforcement fillers include silica powders such as fumed silica (fumed silica or dry silica), precipitated silica (wet silica), spherical silica (molten silica), sol-gel silica, and silica aerogel; silica powders (surface-treated silica powders) prepared by surface-treating the aforementioned silica powders with, for example, various organochlorosilane, organodisilazane, and cyclic organopolysilazane; or silica powders prepared by further treating these surface-treated silica powders with an organosilane or organosiloxane having the monovalent perfluoroalkyl group represented by the general formula (4) or the monovalent perfluorooxyalkyl group represented by the general formula (5). Examples of reinforcement or quasi-reinforcement fillers include a quartz powder, a molten quartz powder, diatomaceous earth, and calcium carbonate. Here, in terms of improving mechanical strengths and improving a dispersion stability of each composition, fumed silica is particularly preferred; further, in terms of improving dispersibility, preferred are those prepared by treating a fumed silica with a silicon compound-based surface treatment agent such as silane, and particularly preferred are those hydrophobized by a hydrolyzable group-containing silicon compound including, for example, an organochlorosilane such as dimethyldichlorosilane and trimethylchlorosilane, a silazane compound such as hexamethyldisilazane and a cyclic silazane such as hexamethylcyclotrisilazane.

In such hydrophobization treatment, it is preferred that a silica powder surface-treated with a surface treatment agent be one that has been directly treated in advance in a powdery state. As a normal treatment method, there may be employed a generally known technique. For example, the aforementioned untreated silica powder and a treatment agent are to be put into a machine kneading device sealed at normal pressure or into a fluidized bed, and then mixed together either at room temperature or in a heated condition under the presence of an inert gas if necessary. There, as appropriate, there may also be used a catalyst and water for promoting hydrolysis. The treated silica powder can then be obtained by performing drying after kneading. The amount of the surface treatment agent added may simply be an amount that is not smaller than an amount calculated from an area by which this surface treatment agent is capable of coating the surface of the silica powder.

Further, the specific surface area of the silica powder by BET method is preferably not smaller than 50 m²/g for the purpose of improving mechanical properties, but not larger than 300 m²/g due to a concern that a significant increase in viscosity will be observed when adding the silica powder to the composition, which may make such addition difficult.

As for the component (D), one kind thereof may be used alone, or two or more kinds thereof may be used in combination.

Further, the bulk density of the reinforcement filler is preferably 30 to 80 g/L. When the bulk density of the reinforcement filler is lower than 30 g/L, addition may be difficult due to an increase in viscosity of the composition; when the bulk density of the reinforcement filler is higher than 80 g/L, a sufficient reinforcement effect may not be imparted.

This reinforcement filler is added in an amount of 10 to 40 parts by mass, more preferably 15 to 30 parts by mass, per 100 parts by mass of the component (A). An amount of smaller than 10 parts by mass will make it impossible to recognize improvements in mechanical strengths; an amount of larger than 40 parts by mass will make addition difficult due to a significant increase in viscosity.

### [Component (E)]

A component (E) is a hydrosilylation reaction control agent, and is an optional component that is added as appropriate. Examples of such hydrosilylation addition reaction control agent include an acetylenic alcohol such as 1-ethynyl-1-cyclohexanol, 3-methyl-1-butyn-3-ol, 3,5-dimethyl-1-hexyn-3-ol, 3-methyl-1-pentyn-3-ol, and phenylbutynol; a reactant of an acetylenic alcohol and a chlorosilane having the monovalent perfluoroalkyl group represented by the general formula (4) or the monovalent perfluorooxyalkyl group represented by the general formula (5); 3-methyl-3-penten-1-yne; 3,5-dimethyl-3-hexen-1-yne; triallyl isocyanurate; a polyvinylsiloxane; and an organic phosphorus compound. By adding these hydrosilylation reaction control agent, curing reactivity and storage stability can be maintained at a proper level. As for the component (E), one kind thereof may be used alone, or two or more kinds thereof may be used in combination. The component (E) may be added in an arbitrary amount so long as the purpose of the present invention is not undermined.

### [Other components]

In addition to the components (A) to (E), for the purpose of improving its practicality, the fluorine-containing curable composition of the present invention may further contain, as optional components and as appropriate, a filler other than the component (D); an adhesion aid (adhesion improver) capable of imparting a self-adhesiveness to the cured product of the composition; a plasticizer; a viscosity modifier; a flexibility-imparting agent; an inorganic pigment such as titanium oxide, iron oxide, carbon black, and cobalt aluminate; a heat resistance improver such as titanium oxide, iron oxide, carbon black, cerium oxide, cerium hydroxide, zinc carbonate, magnesium carbonate, and manganese carbonate; a thermal conductivity-imparting agent such as alumina, boron nitride, silicon carbide, and a metal powder; and an electric conductivity-imparting agent such as carbon black, a silver powder, and a conductive zinc flower. These additives may be added in arbitrary amounts so long as the purpose of the present invention is not undermined.

As a plasticizer, viscosity modifier, and flexibility-imparting agent, there may be used a non-reactive (nonfunctional) linear polyfluoro compound of the following general formula (20), (21) that has no functional groups (alkenyl groups and hydrosilyl groups) in its molecule that are associated with hydrosilylation addition reaction; and/or a polyfluoromonoalkenyl compound of the following general formula (22).

F-(CF₂CF₂CF₂O)_{w}-J (20)

(In the formula (20), J is a group represented by CₓF₂ₓ₊₁- (x is a number of 1 to 3); w is a number of 1 to 500, preferably a number of 2 to 300.)

J-{(OCF(CF₃)CF₂)_{y}-(OCF₂CF₂)_{z}-(OCF₂)_{α}}-O-J (21)

(In the formula (21), J is defined as above; y and z are each a number of 0 to 300, preferably a number of 0 to 150, provided that y and z shall not both be 0. Further, α is a number of 1 to 300, preferably a number of 1 to 150. The repeating units may be bonded to one another randomly.)

Rf-(L)_{β}-CH=CH₂ (22)

[In the formula (22), Rf is a group represented by the following general formula (23)

F-[CF(CF₃)CF₂O]_{γ}-C_{δ}F_{2δ}- (23)

(In the formula (23), γ is a number of 1 to 200, preferably a number of 1 to 150; δ is a number of 1 to 3.), L is -CH₂-, -OCH₂-, -CH₂OCH₂-, or -CO-NR¹¹-M-
<Here, the left end of each of these groups is bonded to Rf, and the right end thereof is bonded to a carbon atom. Further, R¹¹ represents a hydrogen atom, a methyl group, a phenyl group, or an allyl group; and M is -CH₂-, a group represented by the following structural formula (24), or a group represented by the following structural formula (25) 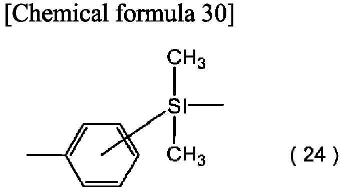 (This group is a dimethylphenylsilylene group represented by o-position, m-position, or p-position, in which the left end thereof is bonded to a nitrogen atom, and the right end thereof is bonded to a carbon atom.) 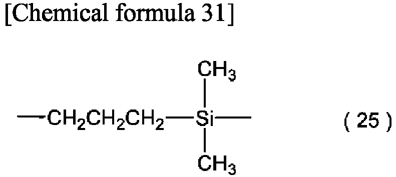 (The left end of this group is bonded to a nitrogen atom, and the right end thereof is bonded to a carbon atom.)>,
and β is 0 or 1.]

Specific examples of the linear polyfluoro compound represented by the general formula (20) or (21) include those shown below.

F-(CF₂CF₂CF₂O)_{w'}-CF₂CF₃

(w' is a number of 1 to 200.)

CF₃-{(OCF(CF₃)CF₂)_{y'}-(OCF₂)_{α'}}-O-CF₃

(y' is a number of 1 to 200, and α' is a number of 1 to 200. The repeating units may be bonded to one another randomly.)

CF₃-{(OCF₂CF₂)_{z'}-(OCF₂)_{α'}}-O-CF₃

(z' is a number of 1 to 200, and α' is a number of 1 to 200. The repeating units may be bonded to one another randomly.)

As for the linear polyfluoro compound represented by the general formula (20) or (21), one kind thereof may be used alone, or two or more kinds thereof may be used in combination.

Specific examples of the polyfluoromonoalkenyl compound represented by the general formula (22) include those shown below. 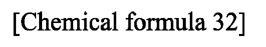 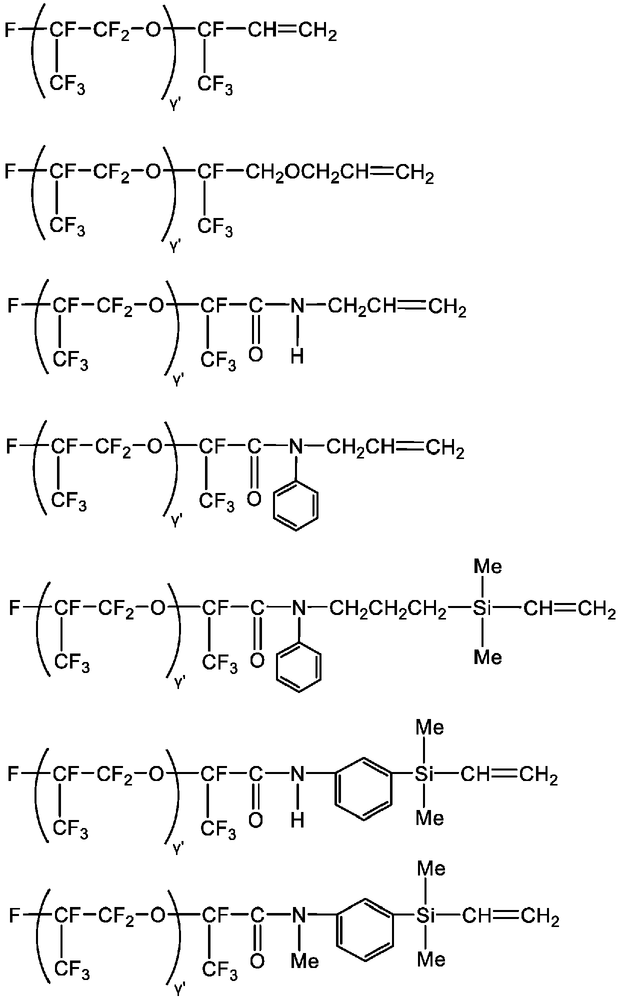 (In these formulae, γ' is a number of 1 to 200.)

As for the polyfluoromonoalkenyl compound represented by the general formula (22), one kind thereof may be used alone, or two or more kinds thereof may be used in combination.

In the fiber base material used in the composite material of the present invention, fibers composing such fiber base material may, for example, be glass fibers, carbon fibers, aramid fibers, polyethylene fibers, zylon fibers, boron fibers, basalt fibers, metal fibers, polyamide fibers, polyethylene fibers, silicon carbide fibers, polyester fibers, ceramic fibers, alumina fibers, mineral fibers, rock fibers, slag fibers, polyoxymethylene fibers, aromatic polyamide fibers, polyparaphenylenebenzobisoxazole fibers, plant fibers, cellulose fibers, and lignin fibers. Of these fibers, glass fibers and carbon fibers are preferred in terms of mechanical strength of the composite body obtained. As for these fibers, one kind thereof may be used alone, or two or more kinds thereof may be used in combination.

The abovementioned fibers may be those that have been surface-treated, treated with a treatment agent, treated with a sizing agent, or plated with a metal.

Examples of the sizing agent include a surfactant such as an ionic surfactant, a nonionic surfactant, and an ampholytic surfactant; a mineral oil; and an animal or vegetable oil. More specifically, there may be used an alkylene glycol-based compound, an ester-based compound, a phenyl ether-based compound, a polyolefin-based compound, a polyether-based compound, a polyethylene glycol-based compound, a silicone-based compound, an amide-based compound, a sulfonate-based compound, a carboxylate-based compound, a phosphate-based compound, and a fluorine-based compound; and even a combination of two or more kinds of them.

As the treatment agent, there may be used a silicone resin, a urethane resin, an epoxy resin, a silane coupling agent, polyamide, and a fluorine resin; and even a combination of two or more kinds of them.

By using such treatment agent, functional groups can be introduced into the surface of the fibers. It is preferred that the reinforcement fibers have, on the surface thereof, one or more of an amide group, alkylene group, alkoxycarbonyl group, acyl group, acetyl group, acetal group, allene group, isonitrile group, imide group, urethane group, urea group, epoxy group, enol group, enamine group, oxime group, carboxyl group, carbonate group, carboxylic acid halide group, glycidyl group, acid anhydride group, cyano group, hydroxyl group, sulfonyl group, sulfo group, hydrocarbon group, halogen group, N-oxide group, N-hydroxy group, nitro group, nitroso group, azo group, diazo group, azide group, oxo group, phenyl group, phosphino group, thio group, S-oxide group, thioxy group, peroxy group, ketone group, benzoyl group, hemiacetal group, formyl group, and thiol group.

In terms of mechanical strength of the composite body obtained, it is preferred that the fibers have an average fiber length of not smaller than 5 mm, more preferably not smaller than 50 mm, even more preferably not smaller than 100 mm.

The fibers may, for example, be in the form of continuous fibers, long fibers, and short fibers, of which continuous fibers are particularly preferred. A material (fiber base material) formed using such fibers may be configured in any fashion, and examples of its configuration may include a unidirectional fiber sheet with the fibers being arranged toward one direction; a material with two or more unidirectional fiber sheets being laminated on top of each other at different angles; a material with the fibers being randomly oriented in the two-dimensional directions; a material with the reinforcement fibers being formed into a fabric such as a textile fabric, a knit fabric, and an unwoven cloth; and a strand-type material such as a braided material. Further, if laminated, it is preferred that multiple layers with different directions are laminated together, that layers are laminated in an alternating manner, or that layers are arranged symmetrically in a thickness direction. The material (fiber base material) formed using the fibers is preferably a sheet for the sake of achieving a superior tensile property.

The sheet thickness of the fiber base material when the material is a sheet is preferably 0.01 to 5 mm, more preferably 0.05 to 4 mm, even more preferably 0.1 to 3 mm, in terms of mechanical strength of the composite body obtained.

### [Method for producing composite body]

The composite body of the present invention can be produced by a production method including:
(1) a step of uniformly impregnating the fiber base material with the curable liquid fluorine-containing composition;
(2) a step of defoaming such fiber base material uniformly impregnated with the curable liquid fluorine-containing composition; and
(3) a step of curing the curable liquid fluorine-containing composition uniformly impregnating the defoamed fiber base material.

In the step (1), as a method for uniformly impregnating the fiber base material with the curable liquid fluorine-containing composition, there may be employed, for example, a method where the fibers are to be simply immersed, for a given period of time, in a sufficient amount of the curable liquid fluorine-containing composition contained in a container before being lifted up, or a method where homogenization is realized by passing the fibers between rollers at the time of immersion or at the time of being lifted up. However, for small quantities, the fluorine-containing rubber composition and the fibers may be put into a tray where the fibers are to be uniformly impregnated with the composition while performing hand rubbing. Here, while the fiber base material used in this step is preferably a sheet-like material, it may also be a mesh-like material; the material may be in the form of a single layer, or multiple layers composed of one or more kinds thereof.

In the step (2), it is critical to defoam the fiber base material uniformly impregnated with the curable liquid fluorine-containing composition for the sake of removing the air bubbles remaining between the fibers composing the fiber base material, and thereby allowing even finer parts of the fiber base material to be impregnated with the liquid material (curable liquid fluorine-containing composition). The defoaming operation may, for example, be performed by a method where the fiber base material is to be left under a reduced pressure for a given period of time. As a pressure reducing apparatus, needed is a vacuum chamber device that operates in conjunction with a vacuum pump. It is desired that the fiber base material be left in a vacuum chamber of -0.05 to -1.0 MPa until the air bubbles have disappeared; however, since the air bubbles do not get squashed easily in the cases of a thick material or fine fibers, there will be no problems even if the defoaming operation is stopped and the fiber base material is taken out at a state where there is no change in an air bubble generation state.

In the step (3), as a method for curing the curable liquid fluorine-containing composition uniformly impregnating the defoamed fiber base material, there may be employed a so-called HAV (Hot Air Vulcanization, normal-pressure hot air vulcanization) method where the fiber base material is to be left and cured under a high temperature and at a normal pressure. However, if high dimensional precisions are required, it is preferred that there be prepared a mold with a target shape, and pressing be then performed under a pressurized and heated condition with a rubber press which is usually used for rubber molding, whereby the composition can be processed easily as in the case of general rubber molding. Pressing may normally be performed at 130 to 170°C for 5 min or longer, where the pressure may be set in accordance with shape and the mold.

The composite material of the present invention is useful as, for example, a seal material, a diaphragm, a protective sheet, and a sheet punched product, because this composite material has a high strength and is superior in both chemical resistance and solvent resistance.

Further, the method for producing the composite material of the present invention is useful as well because a seal material, a diaphragm, a protective sheet, a sheet punched product and the like can be relatively easily produced in a highly productive manner.

### WORKING EXAMPLES

The present invention is described in detail hereunder with reference to working and comparative examples. However, the present invention shall not be limited to the following working examples.

### [Compositions used in working and comparative examples]

### <Rubber composition>

A Perfluoropolyether-based curable liquid fluorine-containing rubber composition: SIFEL3405A/B (by Shin-Etsu Chemical Co., Ltd., two-component type composition)
B Perfluoropolyether-based curable liquid fluorine-containing rubber composition: SIFEL3590-N (by Shin-Etsu Chemical Co., Ltd., one-component type composition)
C Curable liquid silicone rubber composition: KE1950-40A/B (by Shin-Etsu Chemical Co., Ltd., two-component type composition) (for use in comparative example)
D Millable-type fluorine rubber: Dyneon SFM-70A for compression molding (by 3M Japan Limited, FKM full compound, non-liquid raw rubber-like fluorine rubber) (for use in comparative example)

### <Fiber base materials>

I Carbon cloth I: Tarpee carbon cloth C-540 (by HAGIHARA INDUSTRIES INC., 1.8 mm-thick sheet)
II Carbon cloth II: CK6261C (by TORAY INDUSTRIES, INC.)
III Glass cloth: 2116 107 (by Nitto Boseki Co., Ltd.)

### <Evaluation>

### (Tearing strength)

A test piece was prepared by punching each sheet obtained in the following working and comparative examples with a No.4 dumbbell-type blade cutter, and a tearing strength of such test piece was then measured by a tensile tester for rubber property measurement.

### (Toluene swellability and ethanol swellability)

The test piece was put into a reagent bottle containing 100 ml of toluene or ethanol and was immersed therein at 23°C for 24 hours, where "o" was given to examples in which the rubber did not swell and no peeling from the fibers was observed, and "×" was given to examples in which changes were observed.

### <Working examples 1 to 3; and comparative example 1>

As shown in the tables, in order to check differences brought about by different fiber species, there were produced test samples of the composite material, using the rubber composition A as the curable liquid fluorine-containing composition, and the material I, II, or III as the fiber base material (no fiber base material was used in comparative example 1).

The test samples were each produced by the following method. Each fiber base material (fiber sheet) was cut into a size of 9 cm squared, and was then carefully impregnated with the liquid material (rubber composition A) by both hands wearing polyethylene gloves in a stainless-steel container containing the liquid material of an amount that is sufficient for impregnation.

After impregnation was completed, each fiber base material impregnated with the liquid material was put into a vacuum chamber together with the stainless-steel container containing the same, where the fiber base material was subjected to vacuum defoaming until generation of new air bubbles had ceased.

Next, the composite body (each defoamed fiber base material) was put into a 10 cm-squared mold having a thickness of 2 mm or 1 mm, and was cured by a 100 tons hot press (150°C) for rubber molding, thereby obtaining the test sample, where according to the working examples 1 to 3, composite sheets with high tearing strengths were able to be produced easily.

The comparative example 1 is an example in which no fiber base material was used, and a rubber sheet was produced only with the rubber composition A; as compared to the working examples 1 to 3, the tearing strength of such rubber sheet was about 1/20 to 1/80.

**[Table 1]**

| | Working example 1 | Working example 2 | Working example 3 | Comparative example 1 |
|---|---|---|---|---|
| Rubber composition | A | A | A | A |
| Fiber base material (fiber sheet) species | I | II | III | None |
| Immersion time (min) | 30 | 20 | 20 | - |
| Degree of vacuum for defoaming (MPa) | - 1.0 | - 1.0 | - 1.0 | - |
| Defoaming time (min) | 30 | 20 | 15 | - |
| Curing temperature (°C) | 150 | 150 | 150 | 150 |
| Curing time (min) | 10 | 5 | 5 | 10 |
| Sheet thickness after curing (mm) | 2.0 | 1.0 | 1.0 | 20 |
| Sheet appearance | Favorable | Favorable | Favorable | Favorable |
| Tearing strength (kN/m) | 751 | 639 | 204 | 9.2 |
| Toluene swellability | ○ | ○ | ○ | ○ |
| Ethanol swellability | ○ | ○ | ○ | ○ |

### <Working example 4; and comparative examples 2, 3>

The working example 4 is an example in which a sheet was produced in a similar manner as the working example 2 except that the rubber composition B was used as the curable liquid fluorine-containing composition, instead of the rubber composition A. In the working example 4, a composite sheet with a high tearing strength was able to be produced easily as were the cases with the working examples 1 to 3.

The comparative example 2 is an example in which the curable liquid fluorine-containing composition of the working example 4 was changed to the curable liquid silicone rubber composition, and although a sheet that was apparently almost equivalent to that of the working example 4 was able to be produced, the sheet was confirmed to have a poor chemical resistance as it significantly swelled when immersed in toluene.

The comparative example 3 is an example in which a general millable-type fluorine rubber (non-liquid raw rubber-like fluorine rubber) was used instead of the curable liquid fluorine-containing composition of the working example 4. Since there is a risk of ignition by dissolving a millable-type fluorine rubber in a solvent and thus turning it into a liquid, the sheet that was pressed under a heated condition of 170°C was an integrated sheet obtained by passing a three-layered laminate of rubber-fiber base material-rubber through a twin roll for rubber. However, peeling occurred easily as air bubbles accumulated in the interface between the fiber base material and the rubber.

**[Table 2]**

| | Working example 4 | Comparative example 2 | Comparative example 3 |
|---|---|---|---|
| Rubber composition | B | C | D |
| Fiber base material (fiber sheet) species | II | II | II |
| Immersion time (min) | 30 | 30 | - |
| Degree of vacuum for defoaming (MPa) | - 1.0 | -1.0 | - |
| Defoaming time (min) | 30 | 15 | - |
| Curing temperature (°C) | 150 | 150 | 170 |
| Curing time (min) | 10 | 10 | 10 |
| Sheet thickness after curing (mm) | 2.0 | 1.0 | 2.0 |
| Sheet appearance | Favorable | Favorable | Sheet preparation failed due to peeling at interface of fiber base material |
| Tearing strength (kN/m) | 651 | 612 | - |
| Toluene swellability | ○ | × | - |
| Ethanol swellability | ○ | ○ | - |

## Claims

1. A composite material comprising:
a fiber base material; and
a cured product of a curable liquid fluorine-containing composition that contains a curable liquid fluorine-containing compound,
wherein the fiber base material and the cured product are integrally formed with each other.

2. The composite material according to claim 1, wherein the curable liquid fluorine-containing compound is a curable perfluoro group-containing compound.

3. The composite material according to claim 2, wherein the curable perfluoro group-containing compound is a compound having a divalent perfluoroalkylene structure and/or a divalent perfluoropolyether structure.

4. The composite material according to claim 3, wherein the curable perfluoropolyether group-containing compound is a compound containing alkenyl groups.

5. The composite material according to any one of claims 1 to 4, wherein the curable liquid fluorine-containing composition comprises:
(A) a curable polyfluoro compound having at least two alkenyl groups per molecule and having a divalent perfluoroalkylene structure and/or a divalent perfluoropolyether structure in main chain;
(B) a cross-linking agent having at least two hydrosilyl groups per molecule;
(C) a hydrosilylation reaction catalyst; and
(D) a reinforcement filler.

6. The composite material according to claim 5, wherein the curable liquid fluorine-containing composition further comprises:
(E) a hydrosilylation reaction control agent.

7. The composite material according to any one of claims 1 to 6, wherein the fiber base material is a carbon fiber base material or a glass fiber base material.

8. A method for producing the composite material according to any one of claims 1 to 7, comprising:
a step of uniformly impregnating the fiber base material with the curable liquid fluorine-containing composition;
a step of defoaming the fiber base material uniformly impregnated with the curable liquid fluorine-containing composition; and
a step of curing the curable liquid fluorine-containing composition uniformly impregnating the defoamed fiber base material.

9. A rubber product having the composite material according to any one of claims 1 to 7 as a partial or overall structure thereof.

10. The rubber product according to claim 9, wherein the composite material is a seal material, a diaphragm, a protective sheet, or a sheet punched product.
